# FASCICULE DE BREVET EUROPEEN

(11) **EP 0 950 001 B1**
(45) Date de publication et mention de la délivrance du brevet: **19.02.2003**
(21) Numéro de dépôt: 97952118.4
(22) Date de dépôt: 19.12.1997
(51) Int. Cl.: B60J 5/10

(54) **AGENCEMENT POUR L'ACCES A LA PARTIE ARRIERE DE L'HABITACLE D'UN VEHICULE AUTOMOBILE**
ZUGANGANORDNUNG AM HINTEREN TEIL EINES KRAFTFAHRZEUGINNENRAUM
ARRANGEMENT FOR ACCESSING THE REAR PORTION OF THE PASSENGER COMPARTMENT OF A MOTOR VEHICLE

(30) Priorité: 31.12.1996 FR 9616303
(43) Date de publication de la demande: 20.10.1999
(73) Titulaire: Renault s.a.s., 92100 Boulogne Billancourt (FR)
(72) Inventeur: CALONNE, Bruno, F-92300 Levallois Perret (FR); LELONG, Yves, F-78370 Plaisir (FR); MARFAING, Eric, F-60240 Fay les Etangs (FR)
(86) Numéro de dépôt international: FR9702365
(87) Numéro de publication internationale: WO98029273

(56) Documents cités:
- FR-A- 1 431 241
- FR-A- 2 703 005
- US-A- 3 271 067
- US-A- 4 184 709

## Description

La présente invention concerne un agencement pour l'accès à la partie arrière de l'habitacle d'un véhicule automobile.

L'invention concerne plus particulièrement un agencement pour l'accès à une partie arrière de chargement de colis ou de bagages qui, selon une conception connue, est délimitée par deux parois latérales fixes, par un panneau transversal arrière mobile, d'orientation sensiblement verticale en position fermée, et par une partie arrière mobile du pavillon.

En effet, afin de dégager complètement l'accès au plancher de cette partie arrière de chargement, il est connu de dégager l'accès par l'arrière en agençant le panneau transversal arrière mobile autour d'un axe horizontal inférieur ou vertical latéral.

Pour accroître la capacité de chargement, la partie arrière mobile du pavillon permet de dégager une ouverture dans le pavillon ou toit du véhicule pour le chargement de colis de grande hauteur qui dépassent légèrement au dessus du plan général horizontal du toit.

Selon la conception décrite et représentée dans le document FR-A-1.238.438 (divulguant toutes les caractéristiques du préambule de la revendication 1), la partie arrière du pavillon est montée mobile articulée par rapport au pavillon entre une position fermée, dans laquelle elle s'étend dans le prolongement de la partie avant fixe du pavillon, et une position ouverte, dans laquelle elle s'étend au dessus de la partie avant fixe du pavillon.

Pour permettre ce mouvement de pivotement entre les positions fermée et ouverte, la partie arrière mobile du pavillon est montée articulée par son bord transversal avant sur le bord transversal avant de l'ouverture formée dans le pavillon qui est comblée lorsque la partie arrière mobile est en position fermée.

Cette conception rend les manoeuvres d'ouverture et de fermeture de la partie arrière mobile du pavillon particulièrement complexes et, en position ouverte, cette partie occupe une position sensiblement horizontale au dessus de la partie avant fixe du pavillon dans laquelle elle doit être fixée fermement par des moyens d'accrochage et de verrouillage qui font saillie au dessus de la partie avant fixe du pavillon.

Cette conception nuit à l'aspect esthétique du véhicule lorsque la partie arrière mobile est en position fermée et de plus, elle nuit à sa conception aérodynamique dans la mesure où le bord transversal arrière de la partie arrière mobile est généralement incurvé et présente donc une prise au vent particulièrement importante lorsque cette partie arrière mobile est en position ouverte.

Enfin, la manoeuvre de pivotement est peu aisée en cas de vent car le mouvement de pivotement d'environ 180° nécessite de faire passer la partie arrière mobile par des positions intermédiaires dans lesquelles elle offre une très grande prise au vent.

Le document US-A-3271067 décrit un pavillon d'une partie avant qui est mobile entre une position fermée, dans laquelle elle s'étend d'une partie arrière fixe, et une position ouverte dans laquelle elle s'étend au-dessus de la partie arrière fixe. La partie mobile est portée par un parallélogramme déformable.

Afin de remédier à ces inconvénients, l'invention propose un agencement du type mentionné précédemment, caractérisé en ce que la partie arrière mobile du pavillon est montée pivotante par rapport au pavillon par l'intermédiaire d'un dispositif d'articulation comportant une structure à parallélogramme déformable comportant deux biellettes parallèles, avant et arrière, dont chacune est montée articulée sur le pavillon par son extrémité inférieure et sur la partie arrière mobile du pavillon par son extrémité supérieure.

Selon d'autres caractéristiques de l'invention :
- en position fermée de la partie arrière mobile du pavillon, les biellettes s'étendent dans un plan sensiblement parallèle à celui du pavillon ;
- en position ouverte de la partie arrière mobile du pavillon, son bord transversal avant est en appui sur la face supérieure de la partie avant fixe du pavillon, et la partie arrière mobile du pavillon s'étend dans un plan incliné par rapport au plan du pavillon ;
- l'agencement comporte des moyens de verrouillage automatique en position ouverte de la partie arrière mobile du pavillon ;
- les moyens de verrouillage comportent un crochet monté pivotant sur l'une des deux biellettes, autour d'un axe parallèle aux axes d'articulation des biellettes, et un doigt d'accrochage ;
- l'agencement comporte un dispositif amortisseur d'assistance aux efforts de manoeuvre en pivotement de la partie arrière mobile du pavillon ;
- les extrémités inférieures des biellettes avant et arrière sont montées articulées sur une platine longitudinale montée dans une gouttière longitudinale du pavillon qui délimite latéralement l'ouverture du pavillon qui est comblée par la partie arrière mobile du pavillon en position fermée ;
- la platine est fixe par rapport à la gouttière ;
- la platine est montée coulissante longitudinalement, par rapport à la gouttière du pavillon, entre une position reculée, qu'elle occupe lorsque la partie arrière mobile du pavillon est en position fermée, et une position avancée, qu'elle occupe lorsque la partie arrière mobile du pavillon est en position ouverte ;
- l'agencement comporte des moyens de blocage de la platine par rapport à la gouttière en position reculée et en position avancée qui sont des moyens débrayables commandés automatiquement en fonction de l'orientation angulaire des biellettes par rapport à la platine ;
- les moyens de blocage comportent une butée en arc de cercle fixée sur l'une des deux biellettes, centrée autour de l'axe d'articulation inférieur de cette dernière et dont les extrémités libres arrière et avant sont susceptibles d'être reçues dans des encoches arrière et avant fixes agencées au voisinage des extrémités arrière et avant de la gouttière respectivement ;
- l'agencement présente une symétrie de conception par rapport à un plan longitudinal médian du véhicule ;
- en position ouverte de la partie arrière mobile du pavillon et du panneau transversal arrière, l'ouverture d'accès à la partie arrière de l'habitacle ne comporte aucun renfort transversal au niveau de l'intersection des plans horizontal et vertical dans lesquels s'étendent respectivement ces deux éléments en position fermée.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective de trois-quarts qui illustre la partie arrière d'un véhicule automobile destinée à être agencée selon l'invention et sur laquelle le panneau transversal arrière et la partie arrière mobile du pavillon sont illustrés en position fermée ;
- la figure 2 est une vue similaire à celle de la figure 1 dans laquelle les deux éléments mobiles sont illustrés en position ouverte ;
- la figure 3 est une vue qui illustre un exemple de réalisation du dispositif d'articulation ;
- la figure 4 est une vue latérale du dispositif d'articulation de la figure 3 qui est illustré en position fermée de la partie arrière mobile du pavillon ; et
- les figures 5 et 6 sont des vues similaires à celle de la figure 4 sur lesquelles les différents composants sont illustrés dans des positions correspondant à une position angulaire intermédiaire et à la position ouverte de la partie arrière mobile du pavillon.

Dans la description qui va suivre, les composants identiques, similaires ou analogues sont désignés par les mêmes chiffres de référence.

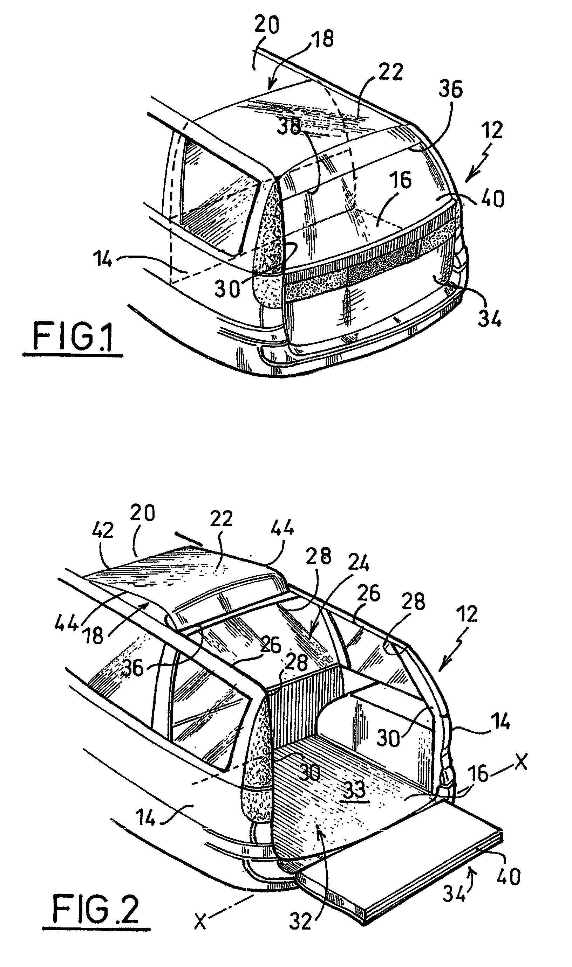

On reconnaît aux figures 1 et 2 la partie arrière 12 d'un véhicule automobile qui est délimitée par deux parois latérales arrière 14 d'orientation sensiblement verticale, par un plancher inférieur horizontal 16 et par un pavillon supérieur 18, lui aussi d'orientation horizontale sensiblement parallèle au plancher 16.

Selon une conception connue, le pavillon ou toit 18 comporte une partie avant fixe 20 et une partie arrière mobile 22.

La partie arrière mobile 22 permet de dégager une ouverture 24 en forme générale de découpe rectangulaire qui est délimitée par deux bords latéraux parallèles et opposés 26 et par un bord transversal avant 28.

L'ouverture 24 débouche vers l'arrière, c'est-à-dire qu'il n'existe aucun élément transversal de renfort, du type traverse, situé aux angles 28 d'intersection entre les bords longitudinaux 26 de l'ouverture 24 et les bords verticaux 30 qui délimitent l'ouverture 32 d'accès par l'arrière au compartiment 33 de chargement du véhicule.

L'ouverture arrière 32 peut être fermée par un panneau arrière transversal mobile 34 qui est ici monté pivotant par rapport au plancher 16, autour d'un axe horizontal inférieur X-X, entre une position fermée illustrée à la figure 1, dans laquelle il s'étend sensiblement dans un plan vertical, et une position ouverte illustrée à la figure 2, dans laquelle il est par exemple sensiblement horizontal dans le prolongement du plancher 16.

L'agencement selon l'invention qui va maintenant être décrit en détails n'est pas limité au cas d'un panneau arrière transversal pivotant autour d'un axe horizontal X-X, ce panneau pouvant par exemple être monté pivotant autour d'un axe vertical situé au droit de l'un des bords verticaux 30 de l'ouverture arrière 32.

La fermeture du compartiment arrière de chargement 33 est assurée par le raccordement du bord transversal arrière 36 de la partie arrière mobile 22 avec le bord transversal supérieur 38 d'une vitre coulissante 40 appartenant au panneau transversal arrière 34.

Comme on peut le voir sur la figure 2, en position ouverte, la partie arrière mobile 22 s'étend au dessus de la partie avant fixe 20 du pavillon 18 avec son bord transversal avant 42 en appui sur la face supérieure de la partie avant fixe 20 du pavillon 18, la partie arrière mobile 22 étant légèrement inclinée par rapport au plan général du pavillon 18 de. manière à offrir une prise au vent réduite lorsqu'elle est en position ouverte, l'inclinaison procurant de plus un effet global de portance aérodynamique positive.

Comme on peut le voir sur la figure 2, l'orientation générale de la partie arrière mobile 22 par rapport au plan du pavillon 18 est sensiblement la même que celle qu'elle occupe en position fermée dans laquelle elle comble l'ouverture 24 formée à l'arrière du pavillon 18.

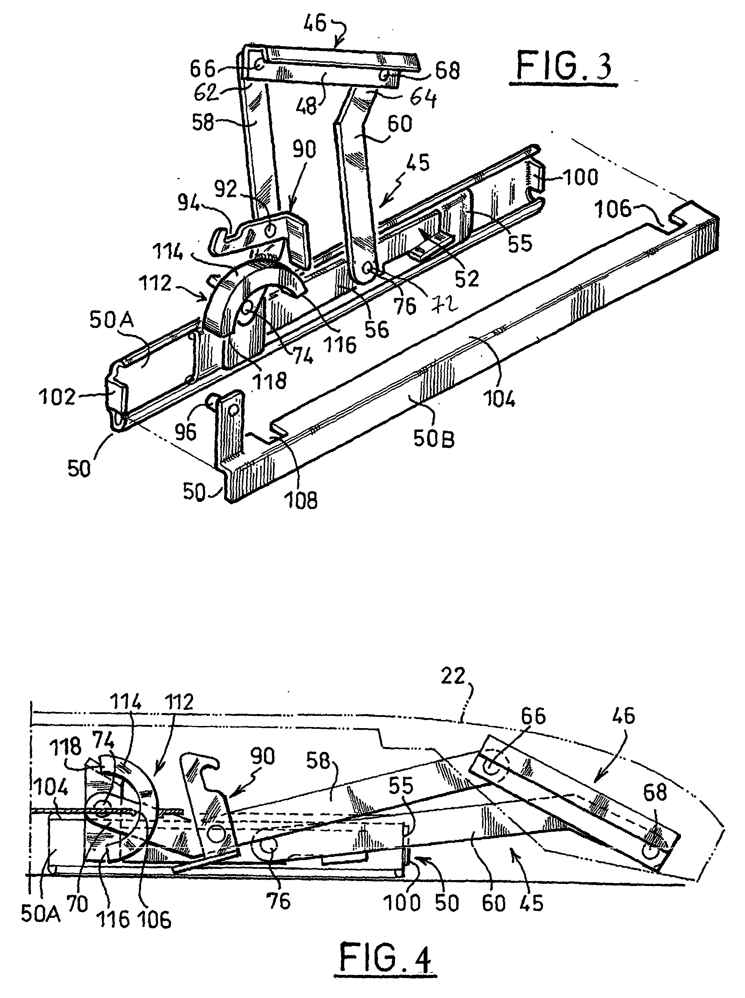

Pour permettre la manoeuvre de la partie arrière mobile 22 entre ses positions fermée et ouverte illustrées aux figures 1 et 2, et conformément aux enseignements de l'invention, celle-ci est montée pivotante par rapport à la structure de la caisse du véhicule, et plus particulièrement par rapport au pavillon 18, par l'intermédiaire d'un dispositif d'articulation dont on décrira maintenant un exemple de réalisation en référence aux figures 3 à 6.

Etant donné que l'agencement selon l'invention présente une symétrie générale de conception par rapport au plan longitudinal médian du véhicule, on a représenté aux figures 3 à 6 seulement une moitié du dispositif d'articulation, c'est-à-dire celle qui est ici agencée au niveau des bords latéraux correspondants de gauche 26 de l'ouverture 24 et 44 de la partie arrière mobile 22.

On a représenté schématiquement à la figure 4 une portion de la partie arrière mobile 22 dont la face inférieure est équipée d'une cornière 46 dont une aile longitudinale 48 s'étend dans un plan vertical.

On a aussi représenté schématiquement aux figures 3 à 6 une partie d'une gouttière longitudinale 50 agencée dans le bord latéral 26 de l'ouverture 24 et qui est située verticalement légèrement en retrait par rapport au plan général du pavillon 18.

Le fond horizontal de la gouttière 50 reçoit une platine d'articulation 52 d'orientation longitudinale qui se prolonge verticalement par une plaque verticale 56 qui s'étend sensiblement dans le même plan vertical que l'aile 48 de la cornière 46.

Le dispositif d'articulation 45 selon l'invention est un parallélogramme déformable qui est constitué par l'aile 48, par la platine 52 et par deux biellettes avant 58 et arrière 60.

Les extrémités supérieures 62 et 64 des biellettes avant 58 et arrière 60 sont montées articulées sur l'aile 48 autour d'axes fixes 66 et 68 portés par l'aile 48 de la cornière 46.

De la même manière, les extrémités inférieures 70 et 72 des biellettes avant 58 et arrière 60 sont montées articulées autour d'axes fixes 74 et 76 portés par la plaque 56 de la platine 52.

Ainsi, les entraxes 66-68 et 74-76 sont constants et sensiblement égaux de manière à obtenir un parallélogramme déformable 45 lorsque les biellettes avant 58 et arrière 60 pivotent simultanément autour de leurs axes qui sont parallèles, horizontaux et d'orientation transversale.

Cette conception du type à parallélogramme déformable permet d'assurer la cinématique des mouvements de la partie arrière mobile 22 , et notamment d'amener la partie arrière mobile 22 dans sa position ouverte illustrée à la figure 2 dans laquelle son bord transversal avant 42 est en appui contre la face supérieure de la partie avant fixe 20 du pavillon 18 par l'intermédiaire de d'une butée souple d'appui (non representée) agencée sous la face inférieure de la partie arrière mobile 22.

Comme on peut le voir notamment aux figures 3 à 6, au cours de son pivotement dans l'un ou l'autre sens par rapport au pavillon fixe 18, la partie arrière mobile 22 garde son orientation sensiblement horizontale par rapport au pavillon 18, c'est-à-dire qu'elle offre une prise au vent réduite facilitant ainsi les manoeuvres d'ouverture et de fermeture.

Pour faciliter davantage ces manoeuvres, ainsi que pour éviter des mouvements brusques et intempestifs, il peut être prévu des moyens d'assistance et d'amortissement aux efforts de manoeuvre (non représentés).

Conformément à un autre aspect de l'invention, il est prévu des moyens de verrouillage automatique en position ouverte de la partie arrière mobile 22.

Dans l'exemple illustré aux figures 3 à 6, ces moyens de verrouillage sont constitués par un crochet 90 qui est monté pivotant sur la biellette avant 58 autour d'un axe 92 parallèle à ses axes d'articulation 68 et 76.

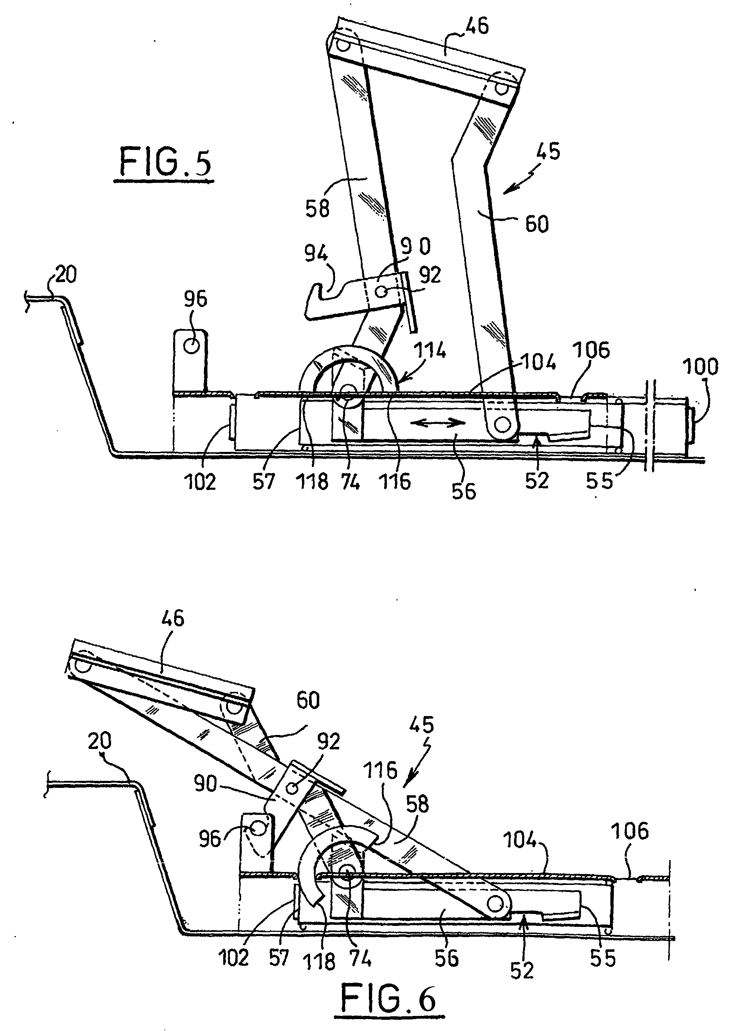

La portion avant du crochet 90 comporte un bec d'accrochage 94 qui est prévu pour coopérer, en position ouverte de la partie arrière mobile et comme cela est illustré à la figure 6, avec un doigt d'accrochage fixe 96.

L'orientation du crochet 90 autour de son axe 92 par rapport à la biellette arrière 60 est maintenue constante par l'intermédiaire d'un ressort de rappel (non représenté sur les figures) et elle est telle qu'elle assure un enclenchement automatique du bec 94 sur le doigt 96 lorsque la partie arrière mobile 22 atteint sa position ouverte illustrée à la figure 6.

Les deux crochets 90 doivent être libérés simultanément, par exemple manuellement, pour permettre le pivotement à nouveau vers l'arrière de la partie arrière mobile 22 depuis sa position ouverte vers sa position fermée.

La conception selon l'invention n'est pas limitée au cas d'une manoeuvre manuelle de la partie arrière mobile 22.

Il est par exemple possible de motoriser ces mouvements, par exemple au moyen de vérins motorisés agencés en lieu et place des dispositifs d'assistance, les moyens motorisés permettant aussi de s'affranchir des moyens de verrouillage, ou d'assurer une commande automatisée du déverrouillage de ces derniers.

La platine 52 d'articulation des extrémités inférieures des biellettes avant 58 et arrière 60 est montée coulissante longitudinalement à l'intérieur de la gouttière 50.

La gouttière 50 est en deux parties comportant une première partie principale 50A en forme de rail à l'intérieur de laquelle est montée coulissante la platine 52 constituée pour l'essentiel par sa plaque verticale 56, les possibilités de coulissement longitudinal de la platine 52 par rapport à la gouttière 50 étant délimitées longitudinalement par une butée transversale arrière 100 et une butée transversale avant 102.

La seconde partie 50B de la gouttière 50 est une pièce de fermeture qui comporte une aile longitudinale supérieure horizontale 104 comportant une encoche arrière 106, une encoche avant 108 et le doigt d'accrochage 96 porté par une patte verticale 110.

Afin de maîtriser les mouvements de coulissement de la platine 52 par rapport à la gouttière 50, et de les synchroniser avec les mouvements de pivotement du dispositif à structure en parallélogramme déformable 45, il est prévu des moyens de blocage 112 constitués par une butée sensiblement en forme de demi-cercle 114 dont les extrémités arrière 116 et avant 118 sont susceptibles de coopérer avec les encoches 106 et 108.

Comme on peut le voir notamment à la figure 4, la butée semi-circulaire 114 est portée par la biellette avant 58 à laquelle elle est fixée et elle est centrée autour de l'axe 74 d'articulation de l'extrémité inférieure 70 de la biellette avant 58.

Dans la position fermée de la partie arrière mobile 22 illustrée à la figure 4, la platine coulissante 52 est en position reculée, c'est-à-dire que le bord d'extrémité arrière 55 de la plaque 56 est en appui contre la butée longitudinale arrière 100 tandis que sensiblement la moitié arrière de la butée tournante 114 est reçue dans l'encoche arrière 106 de la gouttière 50.

A partir de cette position fermée illustrée à la figure 4, on comprend qu'il est possible à la structure 45 de pivoter globalement dans le sens anti-horaire.

Ce mouvement de pivotement se poursuit, sans coulissement relatif de la platine 52 par rapport à la gouttière 50, tant que la partie arrière 116 de la butée tournante 114 est engagée dans l'encoche 106.

Lorsque la butée 114 est dégagée de l'encoche 106, ses deux extrémités libres arrière 116 et avant 118 se retrouvent situées au dessus de la face supérieure de l'aile horizontale 104 de la gouttière 50, comme on peut le voir à la figure 5, c'est-à-dire que la biellette avant 58, et donc aussi la biellette arrière 60, ne peut plus pivoter autour de son axe inférieur 74.

Par contre du fait du dégagement de la butée 114 hors de l'encoche arrière 106, la platine 52 peut coulisser par rapport à la gouttière 50, par exemple de la droite vers la gauche en considérant la figure 9, jusqu'à ce que l'extrémité libre avant 118 de la butée tournante 114, liée en rotation à la biellette avant 58, soit située au droit de l'encoche avant 108. Dès que cette position est atteinte, la biellette avant 58 peut à nouveau pivoter autour de son axe 74, comme cela est illustré à la figure 6, cette position avancée de la platine 52 étant aussi déterminée par la venue en butée du bord d'extrémité avant 57 de la plaque 56 contre la butée longitudinale avant 102 de la gouttière 50.

Cette conception conforme aux enseignements de l'invention permet de concevoir un panneau arrière mobile 22 de plus grande longueur sans augmenter de manière importante l'encombrement du dispositif d'articulation et de coulissement 45.

## Revendications

1. Agencement pour l'accès à la partie arrière (33) de l'habitacle d'un véhicule automobile délimitée par deux parois latérales fixes (14), par un panneau transversal arrière mobile (34) d'orientation sensiblement verticale en position fermée et par une partie arrière mobile (22) du pavillon (18) qui est montée articulée par rapport au pavillon (18) entre une position fermée, dans laquelle elle s'étend dans le prolongement d'une partie avant fixe (20) du pavillon (18), et une position ouverte dans laquelle elle s'étend au dessus de la partie avant fixe (20) du pavillon, **caractérisé en ce que** la partie arrière mobile (22) du pavillon est montée articulée par rapport au pavillon par l'intermédiaire d'un dispositif d'articulation comportant une structure à parallélogramme déformable (45) comportant deux biellettes parallèles, avant (58) et arrière (60), dont chacune est montée articulée sur le pavillon (18) par son extrémité inférieure (74, 76) et sur la partie arrière mobile du pavillon par son extrémité supérieure (66, 68), et les extrémités inférieures (70, 72) des biellettes avant (58) et arrière (60) sont montées articulées sur une platine longitudinale (52) montée coulissante longitudinalement, par rapport à la gouttière (50A, 50B) du pavillon,

2. Agencement selon la revendication 1, **caractérisé en ce que** la platine (52) est coulissante entre une position reculée, qu'elle occupe lorsque la partie arrière mobile (22) du pavillon est en position fermée, et une position avancée, qu'elle occupe lorsque la partie arrière mobile du pavillon est en position ouverte.

3. Agencement selon la revendication précédente, **caractérisé en ce qu'**il comporte des moyens (112) de blocage de la platine (52, 56) par rapport à la gouttière en position reculée et en position avancée qui sont des moyens débravables commandés automatiquement en fonction de l'orientation angulaire des biellettes (58, 60) par rapport à la platine (52, 56).

4. Agencement selon la revendication précédente, **caractérisé en ce que** les moyens de blocage comportent une butée (114) en arc de cercle fixée sur l'une (58) des deux biellettes, centrée autour de l'axe d'articulation inférieur (74) de cette dernière et dont les extrémités libres arrière (116) et avant (118) sont susceptibles d'être reçues dans des encoches arrière (106) et avant (108) fixes agencées au voisinage des extrémités arrière et avant de la gouttière (50B) respectivement.

5. Agencement selon la revendication 1, **caractérisé en ce que**, en position fermée de la partie arrière mobile (22) du pavillon, les biellettes (58, 60) s'étendent dans un plan sensiblement parallèle à celui du pavillon (18).

6. Agencement selon l'une quelconque des revendications précédentes, **caractérisé en ce que**, en position ouverte de la partie arrière mobile (22) du pavillon, son bord transversal avant (42) est en appui sur la face supérieure de la partie avant fixe (20) du pavillon (18), et **en ce que** la partie arrière mobile (22) du pavillon s'étend dans un plan incliné par rapport au plan du pavillon.

7. Agencement selon l'une quelconque des revendications précédentes, **caractérisé en ce qu'**il comporte des moyens (90, 94, 96) de verrouillage automatique en position ouverte de la partie arrière mobile (22) du pavillon.

8. Agencement selon la revendication précédente, **caractérisé en ce que** les moyens de verrouillage comportent un crochet (90) monté pivotant sur l'une (58) des deux biellettes (58, 60), autour d'un axe (92) parallèle aux axes (66, 68, 72, 74) d'articulation des biellettes (58, 60), et un doigt d'accrochage (96).

9. Agencement selon l'une quelconque des revendications précédentes, **caractérisé en ce qu'**il comporte un dispositif (80) amortisseur d'assistance aux efforts de manoeuvre en pivotement de la partie arrière mobile (22) du pavillon.

10. Agencement selon l'une quelconque des revendications précédentes, **caractérisé en ce que**, en position ouverte de la partie arrière mobile (22) du pavillon et du panneau transversal arrière (34), l'ouverture d'accès à la partie arrière (33) de l'habitacle ne comporte aucun renfort transversal au niveau de l'intersection des plans horizontal et vertical dans lesquels s'étendent respectivement ces deux éléments en position fermée.

## Claims

1. An arrangement for access to the rear portion (33) of the passenger space of an automobile vehicle bounded by two fixed side walls (14), a moving rear transverse panel (34) of substantially vertical orientation in the closed position and a moving rear portion (22) of the roof (18) which is mounted in an articulated manner with respect to the roof (18) between a closed position in which it extends as a prolongation of a fixed front portion (20) of the roof (18), and an open position in which it extends above the fixed front portion (20) of the roof, **characterised in that** the moving rear portion (22) of the roof is mounted in an articulated manner with respect to the roof by means of an articulation device comprising a deformable parallelogram structure (45) comprising two parallel front (58) and rear (60) connection rods, each of which is mounted in an articulated manner on the roof (18) by its lower end (74, 76) and on the moving rear portion of the roof by its upper end (66, 68), and the lower ends (70, 72) of the front (58) and rear (60) connection rods are mounted in an articulated manner on a longitudinal plate (52) mounted to slide longitudinally with respect to the duct (50A, 50B) of the roof.

2. An arrangement as claimed in claim 1, **characterised in that** the plate (52) can slide between a retracted position which it occupies when the moving rear portion (22) of the roof is in the closed position, and a forward position which it occupies when the moving rear portion of the roof is in the open position.

3. An arrangement as claimed in the preceding claim, **characterised in that** it comprises means (112) for locking the plate (52, 56) with respect to the duct in the retracted position and in the forward position, these means being disengageable and controlled automatically as a function of the angular orientation of the connection rods (58, 60) with respect to the plate (52, 56).

4. An arrangement as claimed in the preceding claim, **characterised in that** the locking means comprise a stop in the form of a circular arc (114) fixed on one (58) of the two connection rods, centred about the lower axis of articulation (74) of the latter and whose free rear and front ends (116, 118) may be engaged in rear and front slots (106, 108) arranged in the vicinity of the rear and front ends of the duct (50B) respectively.

5. An arrangement as claimed in claim 1, **characterised in that** the connection rods (58, 60) extend in a plane substantially parallel to that of the roof (18) in the closed position of the moving rear portion (22) of the roof.

6. An arrangement as claimed in any one of the preceding claims, **characterised in that**, in the open position of the moving rear portion (22) of the roof, its front transverse edge (42) bears on the upper surface of the fixed front portion (20) of the roof (18), and **in that** the moving rear portion (22) of the roof extends in a plane inclined with respect to the plane of the roof.

7. An arrangement as claimed in any one of the preceding claims, **characterised in that** it comprises means (90, 94, 96) for the automatic locking of the moving rear portion (22) of the roof in the open position.

8. An arrangement as claimed in the preceding claim, **characterised in that** the locking means comprise a hook (90) mounted to pivot on one (58) of the two connection rods (58, 60) about an axis (92) parallel to the axes (66, 68, 72, 74) of articulation of the connection rods (58, 60), and a hooking finger (96).

9. An arrangement as claimed in any one of the preceding claims, **characterised in that** it comprises a manoeuvring effort assistance and shock absorption device (80) for the pivoting of the moving rear portion (22) of the roof.

10. An arrangement as claimed in any one of the preceding claims, **characterised in that**, in the open position of the moving rear portion (22) of the roof and the rear transverse panel (34), the access opening to the rear portion (33) of the passenger space comprises no transverse reinforcement at the location of the intersection of the horizontal and vertical planes in which these two members respectively extend in the closed position.

## Patentansprüche

1. Anordnung für den Zugang zum rückwärtigen Teil (33) des Karosseriegehäuses eines Kraftfahrzeuges, der durch zwei feststehende Seitenwände (14), eine bewegliche hintere quer angeordnete Heckklappe (34), die im wesentlichen in der geschlossenen Stellung senkrecht angeordnet ist und durch einen hinteren beweglichen Abschnitt (22) des Daches (18) begrenzt ist, der gelenkig bezüglich des Daches (18) zwischen einer geschlossenen Stellung, in der er sich in Verlängerung eines vorderen feststehenden Abschnitts (20) des Daches (18) erstreckt und einer offenen Stellung, in der er sich oberhalb des vorderen feststehenden Abschnitts (20) des Daches (18) erstreckt, **dadurch gekennzeichnet, dass** der hintere bewegliche Abschnitt (22) des Daches gelenkig relativ zum Dach angeordnet ist mittels einer Gelenkanordnung , die eine verformbare Parallelogrammstruktur (45) mit zwei parallelen Schwingarmen aufweist, einem vorderen (58) und einem hinteren (60), deren jeder gelenkig mit seinem unteren Ende (74,76) am Dach (18) und gelenkig mit seinem oberen Ende (66,68) am hinteren beweglichen Abschnitt des Daches angeordnet ist, wobei die unteren Enden (70,72) des vorderen Schwingarmes (58) und des hinteren Schwingarmes (60) gelenkig an einer Längsplatine (52) angeordnet sind, die in Längsrichtung gleitet relativ zu einer Rinne (50A,50B) des Daches.

2. Anordnung nach Anspruch 1, **dadurch gekennzeichnet, dass** die Platine (52) gleitet zwischen einer zurückgezogenen Stellung, die sie einnimmt, wenn der hintere bewegliche Abschnitt (22) des Daches in der geschlossenen Stellung ist und einer vorgeschobenen Stellung, die sie einnimmt, wenn der hintere bewegliche Abschnitt des Daches in der offenen Stellung ist.

3. Anordnung nach dem vorhergehenden Anspruch, **dadurch gekennzeichnet, dass** sie eine Anordnung (112) zum Blockieren der Platine (52,56) bezüglich der Rinne in der zurückgezogenen Stellung und in der vorgeschobenen Stellung aufweist, bestehend aus einer Vorrichtung zur automatischen Einschaltung als Funktion der Winkelstellung der Schwingarme (58,60) relativ zur Platine (52,56).

4. Anordnung nach dem vorhergehenden Anspruch, **dadurch gekennzeichnet, dass** die Anordnung zum Blockieren einen Anschlag (114) in Form eines Kreisbogens aufweist, der an einem (58) der beiden Schwingarme befestigt ist und zur unteren Gelenkachse (74) des letzteren zentriert ist, wobei sein freies hinteres Ende (116) und freies vorderen Ende (118) in eine feststehende hintere Aussparung (106) bzw. eine feststehende vordere Aussparung (108) eingreifen können, die in der Nähe des vorderen Endes bzw. des hinteren Endes der Rinne (50B) angeordnet sind.

5. Anordnung nach Anspruch 1, **dadurch gekennzeichnet, dass** in der geschlossenen Stellung des hinteren beweglichen Abschnitts (22) des Daches die Schwingarme (58,60) sich in einer Ebene erstrecken, die im wesentlichen parallel zu derjenigen des Daches (18) ist.

6. Anordnung nach einem der vorhergehenden Ansprüche, **dadurch gekennzeichnet, dass** in der offenen Stellung des hinteren beweglichen Abschnitts (22) des Daches sein vorderer Querrand (42) sich auf der Oberseite des vorderen feststehenden Abschnitts (20) des Daches (18) abstützt und dass der hintere bewegliche Abschnitt (22) des Daches sich in einer bezüglich der Dachebene geneigten Ebene erstreckt.

7. Anordnung nach einem der vorhergehenden Ansprüche, **dadurch gekennzeichnet, dass** sie eine Anordnung (90,94,96) zur automatischen Verriegelung in der offenen Stellung des hinteren beweglichen Abschnitts (22) des Daches aufweist.

8. Anordnung nach dem vorhergehenden Anspruch, **dadurch gekennzeichnet, dass** die Anordnung zur Verriegelung einen Haken (90) aufweist, der an einem (58) der beiden Schwingarme (58,60) schwenkbar um eine Achse (92) angelenkt ist, die parallel zu den Gelenkachsen (66,68,72,74) der Schwingarme (58,60) ist, sowie einen Verankerungsstift (96) aufweist.

9. Anordnung nach einem der vorhergehenden Ansprüche, **dadurch gekennzeichnet, dass** sie eine Vorrichtung (80) zur Dämpfung und Unterstützung der bei der Verschwenkung des hinteren beweglichen Abschnitts (22) des Daches aufzubringen Kraft aufweist.

10. Anordnung nach einem der vorhergehenden Ansprüche, **dadurch gekennzeichnet, dass** in der offenen Stellung des hinteren beweglichen Abschnitts (22) des Daches und der quer angeordneten Heckklappe (34) die Zugangsöffnung für den rückwärtigen Teil (33) des Karosseriegehäuses keine Verstärkung in Querrichtung aufweist auf Höhe der Schnittstellen der waagrechten und der senkrechten Ebenen, in denen diese beiden Bauteile sich in der geschlossenen Stellung erstrecken.
